# EUROPÄISCHE PATENTANMELDUNG

(11) **EP 3 103 596 A1**
(43) Veröffentlichungstag der Anmeldung: **14.12.2016**
(21) Anmeldenummer: 15171273.4
(22) Anmeldetag: 09.06.2015
(51) Int. Cl.: B25J 9/16

(54) **VERFAHREN ZUM BELADEN VON LADUNGSTRÄGERN UND BE-/ENTLADESTATION**

(71) Anmelder: SICK AG, 79183 Waldkirch/Breisgau (DE)
(72) Erfinder: Braune, Ingolf, 79194 Gundelfingen (DE)
(74) Vertreter: Manitz, Finsterwald & Partner GbR

(57) **Zusammenfassung**

Bei einem Verfahren zum Beladen von Ladungsträgern mit Objekten und/oder zum Entnehmen von Objekten von Ladungsträgern werden die Ladungsträger jeweils zu einer Be-/Entladestation transportiert und im Arbeitsbereich einer automatischen Objekt- Handhabungseinrichtung abgestellt. Mittels der automatischen Objekt-Handhabungseinrichtung wird jeweils wenigstens ein Objekt in oder auf einen abgestellten Ladungsträger gelegt oder von einem abgestellten Ladungsträger entnommen. Die Position des abgestellten Ladungsträgers innerhalb des Arbeitsbereichs wird erfindungsgemäß durch eine Sensoranordnung ermittelt und die ermittelte Position wird an eine der Be-/Entladestation zugeordnete Steuereinrichtung übermittelt. Die Erfindung betrifft außerdem eine Be-/Entladestation, mit der ein erfindungsgemäßes Verfahren durchgeführt werden kann.

## Beschreibung

Die vorliegende Erfindung betrifft ein Verfahren zum Beladen von Ladungsträgern, wie Kisten oder Paletten, mit Objekten und/oder zum Entnehmen von Objekten von solchen Ladungsträgern, wobei die Ladungsträger jeweils zu einer Be-/Entladestation transportiert und im Arbeitsbereich einer automatischen Objekt-Handhabungseinrichtung der Be-/Entladestation abgestellt werden, und wobei mittels der automatischen Objekt-Handhabungseinrichtung jeweils wenigstens ein Objekt in oder auf einen abgestellten Ladungsträger gelegt oder von einem abgestellten Ladungsträger entnommen wird. Die Erfindung betrifft außerdem eine Be-/Entladestation, mit der ein solches Verfahren durchgeführt werden kann.

Das automatische Beladen und Entladen von Ladungsträgern ist in verschiedenen Bereichen der Technik von Bedeutung. Beispielsweise müssen in einer automatisierten Produktion häufig Bauteile oder Baugruppen gesammelt transportiert, aber einzeln verarbeitet werden. Zu diesem Zweck werden üblicherweise Ladungsträger mit mehreren gleichartigen Objekten zu einer Be-/Entladestation transportiert und dort mittels eines Handhabungssystems wie eines Roboters einzeln herausgegriffen, um sie der weiteren Verarbeitung zuzuführen. Der Roboter kann kontinuierlich weiterarbeiten, bis der Ladungsträger leer ist. Anschließend ist ein weiterer, mit Objekten befüllter Ladungsträger bereitzustellen. In analoger Weise können im Bereich einer Be-/Entladestation Ladungsträger mit Objekten beladen werden. Bei den Ladungsträgern kann es sich um Kisten, Kästen, Wannen, Paletten oder dergleichen in beliebiger Größe handeln. Das Transportieren solcher Ladungsträger von bzw. zu der Be-/Entladestation erfolgt vorzugsweise mittels Staplern, Hubwagen oder führerlosen Transportsystemen (FTS).

Die herantransportierten Ladungsträger müssen im Arbeitsbereich der Objekt-Handhabungseinrichtung relativ genau positioniert werden, damit ein einwandfreier Betrieb der Objekt-Handhabungseinrichtung gewährleistet ist. Bei einer ungenauen Positionierung kann es insbesondere zu Kollisionen zwischen der Handhabungseinrichtung und dem Ladungsträger und somit zu Beschädigungen entsprechender Systemkomponenten kommen. Das genaue Positionieren der Ladungsträger ist für den Führer des betreffenden Transportmittels aufwändig und mühsam. Zur Erleichterung der manuellen Positionierung können mechanische Anschläge im Arbeitsbereich vorgesehen sein. Diese müssen jedoch vergleichsweise stabil ausgeführt werden und verteuern somit die Anlage. Außerdem zieht eine Dejustierung solcher Anschläge eine aufwändige Reparatur mit unerwünschtem Anlagenstillstand nach sich. Ein weiterer Nachteil von mechanischen Anschlägen besteht darin, dass bei einer Änderung der Position aufgrund einer Produktionsumstellung ein beträchtlicher Umbauaufwand anfällt.

Es ist eine Aufgabe der Erfindung, das Be- und Entladen von Ladungsträgern an Be-/Entladestationen zu vereinfachen.

Die Lösung der Aufgabe erfolgt durch ein Verfahren mit den Merkmalen des Anspruchs 1 bzw. eine Be-/Entladestation mit den Merkmalen des Anspruches 10.

Erfindungsgemäß wird die Position des abgestellten Ladungsträgers innerhalb des Arbeitsbereichs durch eine Sensoranordnung ermittelt. Die so ermittelte Position wird an eine der Be-/Entladestation zugeordnete Steuereinrichtung übermittelt. Die Steuereinrichtung kann die gegebenenfalls vorhandene Abweichung zwischen der vorgegebenen Position und der tatsächlichen Position des abgestellten Ladungsträgers im weiteren Anlagenbetrieb berücksichtigen, so dass unerwünschte Kollisionen vermieden werden. Für die antransportierten Ladungsträger bedeutet dies, dass sie lediglich ungefähr an der gewünschten Position abgestellt werden müssen. Für das betreffende Personal ist dies mit einer wesentlichen Vereinfachung der Arbeitsabläufe verbunden, da das mühsame Einpassen der Ladungsträger entfällt. Auch das Entfernen der Ladungsträger aus dem Arbeitsbereich wird vereinfacht, da es nicht vorsichtig und langsam erfolgen muss. Die Erfindung ermöglicht so einen insgesamt strafferen Betriebsablauf und somit eine Beschleunigung des zugehörigen Produktionsprozesses.

Im Zusammenhang mit den abzustellenden oder abgestellten Ladungsträgern ist der Begriff "Position" breit zu verstehen und soll insbesondere die Schwerpunktslage ebenso wie gegebenenfalls die Ausrichtung, also zum Beispiel die Drehlage und/oder die Verkippung, einschließen.

Bei der Sensoranordnung kann es sich um einen einzelnen Sensor oder um eine Gruppe von mehreren Sensoren handeln. Es ist nicht zwingend erforderlich, dass die Sensoranordnung eigens für den Zweck der Ermittlung der Position der Ladungsträger vorgesehen ist. Insbesondere könnte ein zum Überwachen des Arbeitsbereichs vorgesehener Sicherheitssensor dazu verwendet werden, die Position des abgestellten Ladungsträgers innerhalb des Arbeitsbereichs zu ermitteln und die ermittelte Position an eine der Be-/Entladestation zugeordnete Steuereinrichtung zu übermitteln. Bevorzugt ist einem solchen Sicherheitssensor ein Bildverarbeitungssystem zugeordnet, um einen abgestellten Ladungsträger zum Beispiel an seiner Form zu erkennen. In einem solchen Fall wäre der Sicherheitssensor Teil der Sensoranordnung oder würde deren Aufgabe vollständig übernehmen.

Sehr einfach und robust ist jedoch eine Ausgestaltung, bei der für die Sensoranordnung ein oder mehrere zum Beispiel als Abstandssensoren ausgestaltete Sensoren verwendet werden, die an entsprechenden Stellen um den Arbeitsbereich angeordnet sind, um die Position eines Ladungsträgers zu bestimmen. Vorzugsweise ist ein Abschnitt des Arbeitsbereichs als Toleranzbereich festgelegt, in welchem ein Abstellen von Ladungsträgern zulässig ist, wobei mittels der Sensoranordnung zumindest der Toleranzbereich und vorzugsweise ausschließlich der Toleranzbereich überwacht wird. Im Allgemeinen bereitet es dem für den Transport der Ladungsträger zuständigen Personal keine Probleme, beim Abstellen der Ladungsträger die festgelegte Position annähernd einzuhalten. Durch Beschränkung der Sensorüberwachung auf einen relativ kleinen Toleranzbereich um die gewünschte Position herum kann somit der Herstellungs- und Betriebsaufwand gering gehalten werden, Durch eine Markierung des Toleranzbereichs kann das Positionieren weiter erleichtert werden.

Eine Ausgestaltung der Erfindung sieht vor, dass die automatische Objekt-Handhabungseinrichtung programmgesteuert ist und eine Steuereinrichtung aufweist, wobei die ermittelte Position an die Steuereinrichtung der programmgesteuerten Objekt-Handhabungseinrichtung übermittelt wird und das Programm der programmgesteuerten Objekt-Handhabungseinrichtung bedarfsweise an die übermittelte Position des Ladungsträgers angepasst wird. Auf diese Weise ist sichergestellt, dass die Handhabungseinrichtung stets die korrekten Bewegungen ausführt und die gewünschten Objekte ergreift - unabhängig davon, an welcher Position der Ladungsträger mit den Objekten tatsächlich abgestellt ist.

Eine weitere Ausgestaltung der Erfindung sieht vor, dass die Be-/Entladestation eine automatische Ladungsträger-Handhabungseinrichtung mit einer Steuereinrichtung aufweist, wobei die ermittelte Position an die Steuereinrichtung der Ladungsträger-Handhabungseinrichtung übermittelt wird und mittels der Ladungsträger-Handhabungseinrichtung anhand der übermittelten Position eine bedarfsweise Positionskorrektur des betreffenden abgestellten Ladungsträgers vorgenommen wird. Sollte also die tatsächliche Position des abgestellten Ladungsträgers von der vorgegebenen Position abweichen, so sorgt die Ladungsträger-Handhabungseinrichtung, bei der es sich insbesondere um einen weiteren Roboter handeln kann, für ein Verstellen, Verschieben oder Verdrehen des Ladungsträgers in die korrekte Position. Die Steuerung der Objekt-Handhabungseinrichtung kann davon im Prinzip unbeeinflusst bleiben.

Gemäß einer weiteren Ausführungsform der Erfindung wird zumindest ein Teil des Arbeitsbereichs durch wenigstens einen Sicherheitssensor unter Ausbildung wenigstens eines Schutzfeldes überwacht, wobei das Schutzfeld bedarfsweise an die ermittelte Position des Ladungsträgers angepasst wird. An Be-/Entladestationen ist es im Allgemeinen erforderlich, das im Bereich der Maschinen arbeitende Personal mittels Sicherheitssensoren vor Unfällen zu schützen. Als Sicherheitssensoren können Kameras, Abstandssensoren oder Scanner, insbesondere 3D-Kameras oder Lichtlaufzeit-Kameras, zum Einsatz kommen. Derartige Sicherheitssensoren spannen üblicherweise ein oder mehrere Schutzfelder auf und sorgen dafür, dass beim Eindringen eines Objekts in ein Schutzfeld die zugehörige Maschine in einen sicheren Zustand, beispielsweise in den Stillstand, überführt wird. Das Schutzfeld ist hierbei nicht zwingend identisch mit dem Messfeld oder Gesichtsfeld des betreffenden Sensors. Vielmehr ist das Schutzfeld unabhängig vom Messfeld softwareseitig konfiguriert. Durch Anpassung des Schutzfelds an die ermittelte Position des Ladungsträgers ist sichergestellt, dass der Personenschutz durch einen fehlpositionierten Ladungsträger in keiner Weise beeinträchtigt ist. Außerdem wird ein unerwünschter Anlagenstillstand vermieden.

Zur Berücksichtigung eines Sicherheitsabstandes kann zumindest ein äußerer Rand des wenigstens einen Schutzfeldes an die ermittelte Position des Ladungsträgers angepasst werden. Sollte also beispielsweise ein Ladungsträger etwas zu weit links abgestellt sein, so wird das Schutzfeld zur linken Seite hin entsprechend vergrößert, um so die Einhaltung des Sicherheitsabstands zu gewährleisten.

Eine besonders einfache Schutzfeldanpassung wird dadurch erzielt, dass das wenigstens eine Schutzfeld zur Anpassung an die ermittelte Position des Ladungsträgers als Ganzes verschoben wird.

Gemäß einer weiteren Ausgestaltung der Erfindung weist das wenigstens eine Schutzfeld einen äußeren Rand sowie einen entlang einer Aussparung des Schutzfeldes verlaufenden inneren Rand auf, wobei ausschließlich der innere Rand an die ermittelte Position des Ladungsträgers angepasst wird. Eine Aussparung des Schutzfeldes kann im Allgemeinen zur Aufnahme des Ladungsträgers erforderlich sein. Denn innerhalb des für den Ladungsträger reservierten Raumes darf in der Regel kein aktives Schutzfeld definiert sein. Durch eine Anpassung des entlang der Aussparung verlaufenden inneren Schutzfeldrandes wird im Falle einer Fehlpositionierung des Ladungsträgers eine unerwünschte Sicherheitsabschaltung vermieden. Es könnte grundsätzlich auch eine Erkennung des Ladungsträgers innerhalb eines Schutzfeldes vorgesehen sein, beispielsweise mittels eines mit dem Sicherheitssensor zusammenarbeitenden Bildverarbeitungssystems, um auf diese Weise eine Sicherheitsabschaltung durch einen vorhandenen Ladungsträger zu vermeiden. Eine Aussparung des Schutzfeldes ist dann nicht zwingend notwendig.

Mittels der Sensoranordnung kann ferner ein aktueller Beladezustand des Ladungsträgers, insbesondere ein aktueller Füllstand, ermittelt und an die oder eine weitere Steuereinrichtung übermittelt werden. Der Beladezustand ist ein Maß für den noch verfügbaren Objektvorrat. Der Sensoranordnung kommt bei dieser Ausgestaltung eine Doppelfunktion zu, indem sie sowohl durch Berücksichtigung von Fehlpositionierungen den Arbeitsablauf vereinfacht als auch durch Auswerten von Beladungsinformationen die Anlageneffizienz steigert.

Die Erfindung betrifft auch eine Be-/Entladestation zum Beladen von Ladungsträgern wie Kisten oder Paletten mit Objekten und/oder zum Entnehmen von Objekten von solchen Ladungsträgern, mit einer automatischen Objekt- Handhabungseinrichtung, welche einen Arbeitsbereich aufweist und zum Legen jeweils wenigstens eines Objekts in oder auf einen im Arbeitsbereich abgestellten Ladungsträger und/oder zum Entnehmen eines Objekts von einem im Arbeitsbereich abgestellten Ladungsträger ausgebildet ist, wobei die Be-/Entladestation insbesondere zum Durchführen eines wie vorstehend beschriebenen Verfahrens ausgebildet ist.

Eine erfindungsgemäße Be-/Entladestation weist eine Sensoranordnung zum Ermitteln der Position eines abgestellten Ladungsträgers innerhalb des Arbeitsbereichs sowie Übertragungsmittel zum Übermitteln der ermittelten Position an eine der Be-/Entladestation zugeordnete Steuereinrichtung auf. Die Übertragungsmittel können je nach Anwendung eine kabelgebundene oder eine drahtlose Verbindung zwischen der Sensoranordnung und der Steuereinrichtung bereitstellen.

Die Sensoranordnung kann wenigstens eine Kamera umfassen und/oder mehrere Messfelder aufweisen. Bei der Kamera kann es sich insbesondere um eine 3D-Stereokamera oder eine Lichtlaufzeitkamera, welche als Tiefenkamera ausgestaltet ist und in der Lage ist, auch Tiefeninformationen auszugeben, handeln.

Bei der Sensoranordnung kann es sich um einen einzelnen Sensor oder um eine Gruppe von mehreren Sensoren handeln. Es ist nicht zwingend erforderlich, dass die Sensoranordnung eigens für den Zweck der Ermittlung der Position der Ladungsträger vorgesehen ist. Insbesondere könnte ein zum Überwachen des Arbeitsbereichs vorgesehener Sicherheitssensor dazu verwendet werden, die Position des abgestellten Ladungsträgers innerhalb des Arbeitsbereichs zu ermitteln und die ermittelte Position an eine der Be-/Entladestation zugeordnete Steuereinrichtung zu übermitteln. Bevorzugt ist einem solchen Sicherheitssensor ein Bildverarbeitungssystem zugeordnet, um einen abgestellten Ladungsträger zum Beispiel an seiner Form zu erkennen. In einem solchen Fall wäre der Sicherheitssensor Teil der Sensoranordnung oder würde deren Aufgabe vollständig übernehmen.

Sehr einfach und robust ist jedoch eine Ausgestaltung, bei der für die Sensoranordnung ein oder mehrere zum Beispiel als Abstandssensoren ausgestaltete Sensoren verwendet werden, die an entsprechenden Stellen um den Arbeitsbereich angeordnet sind, um die Position eines Ladungsträgers zu bestimmen.

Gemäß einer Ausführungsform der Erfindung ist im Arbeitsbereich der automatischen Objekt-Handhabungseinrichtung kein mechanischer Anschlag zur Festlegung der Abstellposition der Ladungsträger vorgesehen. Aufgrund der automatischen Berücksichtigung von etwaigen Fehlpositionierungen ist ein solcher mechanischer Anschlag nicht notwendig. Für die Gesamtanlage ist das Fehlen eines Anschlags von Vorteil, da Produktionsumstellungen leichter realisiert werden können. Außerdem ist die Unfallgefahr reduziert.

Gemäß einer speziellen Ausgestaltung einer erfindungsgemäßen Be-/Entladestation ist die automatische Objekt-Handhabungseinrichtung programmgesteuert und die Steuereinrichtung ist dazu ausgebildet, das Programm der programmgesteuerten Objekt-Handhabungseinrichtung bedarfsweise an die ermittelte Position des Ladungsträgers anzupassen.

Gemäß einer weiteren Ausgestaltung ist eine Ladungsträger-Handhabungseinrichtung vorgesehen, welche dazu ausgebildet ist, anhand der ermittelten Position eine bedarfsweise Positionskorrektur des Ladungsträgers vorzunehmen.

Bevorzugt umfasst eine erfindungsgemäße Be-/Entladestation wenigstens einen Sicherheitssensor zum Überwachen zumindest eines Teils des Arbeitsbereichs unter Ausbildung wenigstens eines Schutzfeldes, wobei eine dem wenigstens einen Sicherheitssensor zugeordnete Sicherheits-Steuereinrichtung dazu ausgebildet ist, das Schutzfeld bedarfsweise an die ermittelte Position des Ladungsträgers anzupassen.

Insbesondere kann ein Abschnitt des Arbeitsbereichs als Toleranzbereich festgelegt sein, in welchem ein Abstellen von Ladungsträgern zulässig ist, wobei die Sensoranordnung vorzugsweise dazu ausgebildet ist, ausschließlich den Toleranzbereich zu überwachen.

Die Steuereinrichtung kann einen Schreib-/Lese-Speicher umfassen, in welchem Prozessparameter, wie die Dimensionierung der Ladungsträger, abgelegt sind. Bei einem Produktionswechsel können die abgespeicherten Prozessparameter einfach und schnell geändert werden.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben.
- Fig. 1: ist eine vereinfachte Seitenansicht einer erfindungsgemäßen Be-/Entladestation.
- Fig. 2: ist eine Draufsicht auf die Be-/Entladestation gemäß Fig. 1.
- Fig. 3: ist eine Teildarstellung der in Fig. 2 gezeigten Anordnung, welche die Funktion einer Sensoranordnung der Be-/Entladestation verdeutlicht.
- Fig. 4: ist eine weitere Teildarstellung der in Fig. 2 gezeigten Anordnung, welche die Anpassung eines inneren Randes eines Schutzfelds der Sensoranordnung verdeutlicht.
- Fig. 5: ist eine weitere Teildarstellung der in Fig. 2 gezeigten Anordnung, welche die Anpassung eines äußeren Rands des Schutzfelds verdeutlicht.

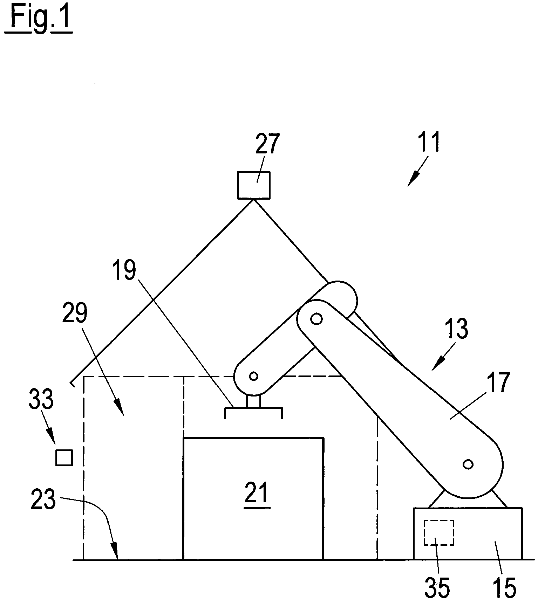

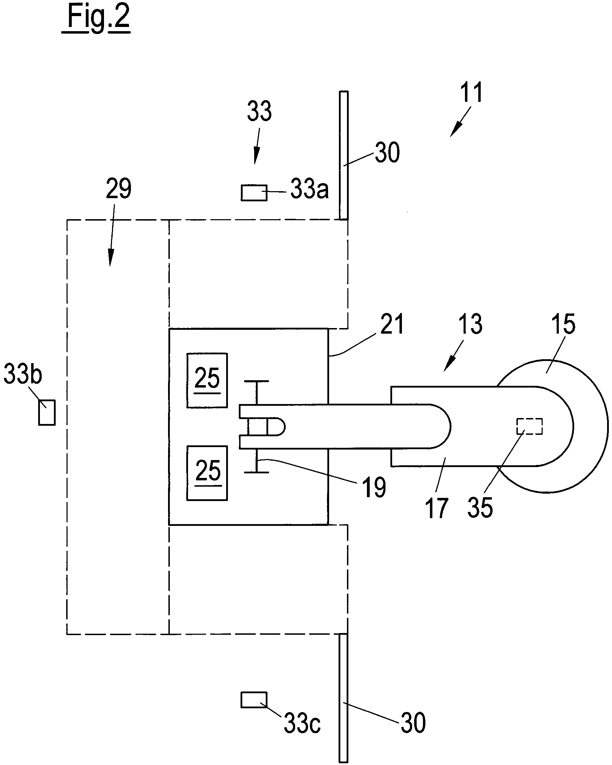

Die in Fig. 1 und 2 vereinfacht dargestellte Be-/Entladestation 11 gehört zu einer Produktionslinie und umfasst einen Roboter 13, welcher in grundsätzlich bekannter Weise eine Basis 15, eine Gelenkarmanordnung 17 sowie einen Endeffektor 19 aufweist. Anstelle des Roboters 13 könnte auch eine andere Art von automatischer Handhabungseinrichtung, wie zum Beispiel ein Portalsystem, vorgesehen sein. Im Arbeitsbereich des Roboters 13 ist ein Ladungsträger 21 in Form eines kistenartigen Behälters auf dem Boden 23 abgestellt. In dem Ladungsträger 21 befinden sich Objekte 25, von welchen zwei in Fig. 2 gezeigt sind. Bei den Objekten 25 kann es sich um beliebige Einzelteile oder Baugruppen für eine automatische Fertigung handeln. Der Endeffektor 19 des Roboters 13 ist zum Greifen der Objekte 25 ausgebildet und kann somit einen Ladungsträger 21 mit Objekten 25 beladen oder Objekte 25 von einem Ladungsträger 21 abladen.

Der Arbeitsbereich des Roboters 13 wird durch einen oberhalb des Roboters 13 angeordneten Sicherheitssensor 27 überwacht. Bei Bedarf kann die Be-/Entladestation 11 auch mit mehreren Sicherheitssensoren 27 versehen sein. Der Sicherheitssensor 27 ist vorzugsweise als Tiefeninformationen ausgebende 3D-Kamera ausgeführt und spannt ein softwareseitig konfiguriertes Schutzfeld 29 auf. Eine nicht dargestellte Steuereinrichtung der Be-/Entladestation 11 steht mit dem Sicherheitssensor 27 in Verbindung und sorgt dafür, dass bei jeglichem Eindringen von Objekten in das Schutzfeld 29 der Roboter 13 und gegebenenfalls weitere bewegliche Anlagenkomponenten in einen sicheren Zustand überführt wird. In Fig. 2 ist zu erkennen, dass sich beidseits des Schutzfeldes 29 mechanische Absperrungen 30 wie z. B. Zäune befinden.

Zum Beladen eines Ladungsträgers 21 mit Objekten 25 wird zunächst ein leerer Ladungsträger 21 zu der Be-/Entladestation 11 transportiert und auf dem Boden 23 abgestellt. Anschließend werden mittels des Roboters 13 einzeln und nacheinander Objekte 25 aus einem nicht dargestellten Objektvorrat entnommen und in dem Ladungsträger 21 abgelegt. Sobald der Ladungsträger 21 vollständig mit Objekten befüllt oder bestückt ist, wird er wieder abtransportiert.

Zum Entladen von Objekten 25 aus dem Ladungsträger 21 wird in analoger Weise vorgegangen, wobei zunächst ein befüllter oder bestückter Ladungsträger 21 zu der Be-/Entladestation 11 transportiert und im Arbeitsbereich des Roboters 13 abgestellt wird. Die Objekte 25 werden dann mittels des Roboters 13 einzeln nacheinander aus dem Ladungsträger 21 entnommen und einer weiteren Verarbeitung in der Produktionslinie zugeführt.

Der Antransport der Ladungsträger 21 zu der Be-/Entladestation 11 sowie der Abtransport der Ladungsträger 21 von der Be-/Entladestation 11 erfolgt vorzugsweise mittels eines Gabelstaplers, Hubwagens oder eines führerlosen Transportsystems.

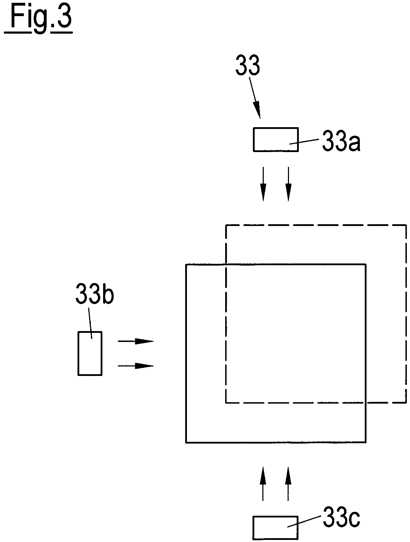

Die Be-/Entladestation 11 umfasst eine Sensoranordnung 33, mittels welcher die Lage und die Ausrichtung des Ladungsträgers 21 innerhalb des Arbeitsbereichs des Roboters 13 ermittelbar ist. Wie aus Fig. 2 und 3 hervorgeht, umfasst die Sensoranordnung 33 bei dem dargestellten Ausführungsbeispiel drei Abstandssensoren oder 3D-Sensoren 33a-c, deren Messfelder auf jeweilige Seitenflächen des Ladungsträgers 21 gerichtet sind. Aus fachmännischer Sicht versteht sich, dass eine Vielzahl weiterer Sensorkonfigurationen möglich ist, um die Position des Ladungsträgers 21 zu erfassen.

Die Sensoranordnung 33 steht mit einer Steuereinrichtung 35 des Roboters 13 in Verbindung und ist dazu ausgebildet, die ermittelte Position des abgestellten Ladungsträgers 21 an die Steuereinrichtung 35 zu übermitteln. Sollte der Ladungsträger 21 nicht exakt an der vorgegebenen Position abgestellt sein, so wird die entsprechende Fehlpositionierung beim Betrieb des Roboters 13 berücksichtigt. Der Roboter 13 greift somit auch bei einem fehlpositionierten Ladungsträger 21 nicht daneben. Kollisionen zwischen dem Roboter 13 und dem Ladungsträger 21 sind ausgeschlossen. Die Sensoranordnung 33 könnte auch mit der Steuereinrichtung eines nicht dargestellten weiteren Roboters in Verbindung stehen, der zum Handhaben von Ladungsträgern 21 ausgebildet ist und bei Bedarf für eine Positionskorrektur des abgestellten Ladungsträgers 21 sorgt. Bei einer solchen, nicht dargestellten Ausführungsform der Erfindung wäre das Übermitteln der ermittelten Position an die Steuereinrichtung 35 des zum Handhaben der Objekte 25 vorgesehenen Roboters 13 nicht zwingend erforderlich. Grundsätzlich könnte die Sensoranordnung 33 auch mit einer übergeordneten Steuereinrichtung der Be-/Entladestation 11 in Verbindung stehen.

Bei einer nicht dargestellten Ausführungsform könnte der Sicherheitssensor 27 dazu ausgebildet sein, die Lage und die Ausrichtung des Ladungsträgers 21 innerhalb des Arbeitsbereichs des Roboters 13 zu ermitteln und die ermittelte Position des abgestellten Ladungsträgers 21 an die Steuereinrichtung 35 zu übermitteln. Bei einer solchen Ausgestaltung würde der Sicherheitssensor 27 die Aufgabe der Sensoranordnung mit übernehmen und insofern die Sensoranordnung darstellen.

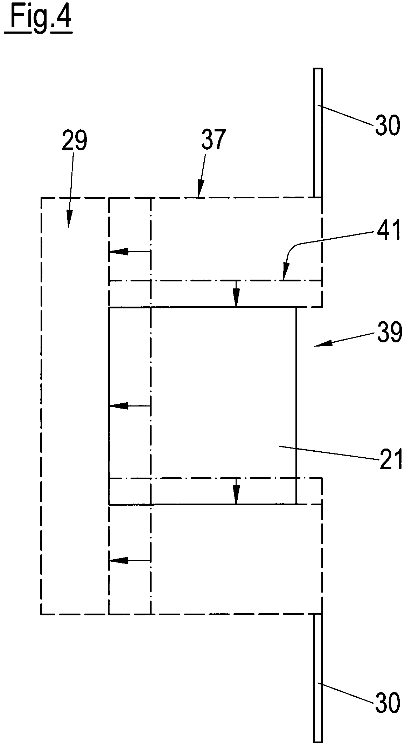

Eine etwaige Fehlpositionierung des Ladungsträgers 21 wird nicht nur bei der Bewegungssteuerung des Roboters 13 berücksichtigt, sondern führt auch zu einer Anpassung des Schutzfeldes 29. Aus Fig. 4 geht hervor, dass das Schutzfeld 29 einen äußeren Rand 37 (gestrichelt dargestellt) sowie einen entlang einer Aussparung 39 verlaufenden inneren Rand 41 (strichpunktiert dargestellt) aufweist. Die Aussparung 39 dient zur Aufnahme des Ladungsträgers 21. Der innere Rand 41 wird, wie in Fig. 4 durch Pfeile dargestellt, anhand der ermittelten Position des Ladungsträgers 21 angepasst, um einerseits eine Maschinenabschaltung bei Hineinragen des Ladungsträgers 21 in das Schutzfeld 29 zu vermeiden und andererseits eine sicherheitstechnisch bedenkliche Lücke zwischen dem Ladungsträger 21 und dem inneren Rand 41 des Schutzfeldes 29 auszuschließen.

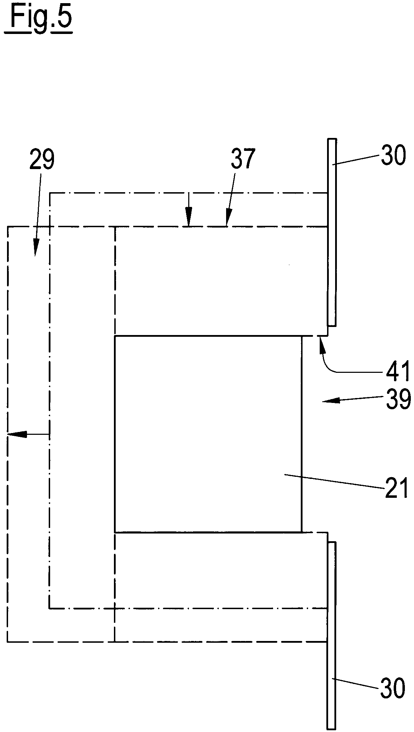

Wie in Fig. 5 gezeigt ist, wird auch der äußere Rand 37 angepasst, um die genormten Sicherheitsabstände zum Ladungsträger 21 aufrecht zu erhalten. Das Schutzfeld 29 kann außerdem zur Anpassung an die ermittelte Position des Ladungsträgers 21 auch als Ganzes verschoben werden.

Dadurch, dass eventuelle Fehlpositionierungen des Ladungsträgers 21 sowohl bei der Steuerung des Roboters 13 als auch bei der Festlegung des Schutzfeldes 29 automatisch berücksichtigt werden, ist ein exaktes und umsichtiges Abstellen des Ladungsträgers 21 beim Antransport sowie ein vorsichtiges Entfernen des Ladungsträgers 21 beim Abtransport nicht erforderlich. Es reicht insbesondere aus, dass der Ladungsträger 21 lediglich ungefähr an der korrekten Position abgestellt wird. Dementsprechend ist es bevorzugt, dass im Arbeitsbereich des Roboters 13 kein mechanischer Anschlag zur Festlegung der Position der Ladungsträger 21 vorgesehen ist. Außerdem ist es nicht erforderlich, die vorgegebene Position als solche zu markieren. Stattdessen kann ein Abschnitt des Arbeitsbereichs als Toleranzbereich festgelegt und entsprechend markiert sein, in welchem ein Abstellen von Ladungsträgern 21 zulässig ist. Für den Bediener eines Gabelstaplers oder Hubwagens ist es einfach, die Ladungsträger 21 innerhalb des Toleranzbereichs abzustellen und hierbei nicht weiter auf eine korrekte Positionierung zu achten. Ebenso ist es von Vorteil, dass beim Abtransport der Ladungsträger 21 nicht auf einen mechanischen Anschlag oder dergleichen geachtet werden muss. Die Erfindung ermöglicht somit einen besonders effizienten Betrieb der Be-/Entladestation 11 innerhalb der Produktionslinie.

### Bezugszeichenliste

- 11: Be-/Entladestation
- 13: Roboter
- 15: Basis
- 17: Gelenkarmanordnung
- 19: Endeffektor
- 21: Ladungsträger
- 23: Boden
- 25: Objekt
- 27: Sicherheitssensor
- 29: Schutzfeld
- 30: Absperrung
- 33: Sensoranordnung
- 33a - c: Abstandssensor
- 35: Steuereinrichtung
- 37: äußerer Rand
- 39: Aussparung
- 41: innerer Rand

## Patentansprüche

1. Verfahren zum Beladen von Ladungsträgern (21), wie Kisten oder Paletten, mit Objekten (25) und/oder zum Entnehmen von Objekten (25) von solchen Ladungsträgern (21), wobei die Ladungsträger (21) jeweils zu einer Be-/Entladestation (11) transportiert und im Arbeitsbereich einer automatischen Objekt-Handhabungseinrichtung (13) der Be-/Entladestation (11) abgestellt werden, und wobei mittels der automatischen Objekt-Handhabungseinrichtung (13) jeweils wenigstens ein Objekt (25) in oder auf einen abgestellten Ladungsträger (21) gelegt oder von einem abgestellten Ladungsträger (21) entnommen wird,
**dadurch gekennzeichnet, dass**
die Position des abgestellten Ladungsträgers (21) innerhalb des Arbeitsbereichs durch eine Sensoranordnung (33) ermittelt wird und die ermittelte Position an eine der Be-/Entladestation (11) zugeordnete Steuereinrichtung (35) übermittelt wird.

2. Verfahren nach Anspruch 1,
**dadurch gekennzeichnet, dass**
ein Abschnitt des Arbeitsbereichs als Toleranzbereich festgelegt ist, in welchem ein Abstellen von Ladungsträgern (21) zulässig ist, wobei mittels der Sensoranordnung (33) zumindest der Toleranzbereich und vorzugsweise ausschließlich der Toleranzbereich überwacht wird.

3. Verfahren nach Anspruch 1 oder 2,
**dadurch gekennzeichnet, dass** die automatische Objekt-Handhabungseinrichtung (13) programmgesteuert ist und eine Steuereinrichtung (35) aufweist, wobei die ermittelte Position an die Steuereinrichtung (35) der programmgesteuerten Objekt-Handhabungseinrichtung (13) übermittelt wird und das Programm der programmgesteuerten Objekt-Handhabungseinrichtung (13) bedarfsweise an die übermittelte Position des Ladungsträgers (21) angepasst wird.

4. Verfahren nach einem der vorstehenden Ansprüche,
**dadurch gekennzeichnet, dass** die Be-/Entladestation (11) eine automatische Ladungsträger-Handhabungseinrichtung mit einer Steuereinrichtung aufweist, wobei die ermittelte Position an die Steuereinrichtung der Ladungsträger-Handhabungseinrichtung übermittelt wird und mittels der Ladungsträger-Handhabungseinrichtung anhand der übermittelten Position eine bedarfsweise Positionskorrektur des betreffenden abgestellten Ladungsträgers (21) vorgenommen wird.

5. Verfahren nach einem der vorstehenden Ansprüche,
**dadurch gekennzeichnet, dass** zumindest ein Teil des Arbeitsbereichs durch wenigstens einen Sicherheitssensor (27) unter Ausbildung wenigstens eines Schutzfeldes (29) überwacht wird, wobei das Schutzfeld (29) bedarfsweise an die ermittelte Position des Ladungsträgers (21) angepasst wird.

6. Verfahren nach Anspruch 5,
**dadurch gekennzeichnet, dass**
zur Berücksichtigung eines Sicherheitsabstandes zumindest ein äußerer Rand (37) des wenigstens einen Schutzfeldes (29) an die ermittelte Position des Ladungsträgers (21) angepasst wird.

7. Verfahren nach Anspruch 5 oder 6,
**dadurch gekennzeichnet, dass**
das wenigstens eine Schutzfeld (29) zur Anpassung an die ermittelte Position des Ladungsträgers (21) als Ganzes verschoben wird.

8. Verfahren nach Anspruch 5,
**dadurch gekennzeichnet, dass**
das wenigstens eine Schutzfeld einen äußeren Rand (37) sowie einen entlang einer Aussparung (39) des Schutzfeldes (29) verlaufenden inneren Rand (41) aufweist, wobei ausschließlich der innere Rand (41) an die ermittelte Position des Ladungsträgers (21) angepasst wird.

9. Verfahren nach einem der vorstehenden Ansprüche,
**dadurch gekennzeichnet, dass**
mittels der Sensoranordnung (33) ferner ein aktueller Beladezustand des Ladungsträgers (21), insbesondere ein aktueller Füllstand, ermittelt und an die oder eine weitere Steuereinrichtung (35) übermittelt wird.

10. Be-/Entladestation (11) zum Beladen von Ladungsträgern (21), wie Kisten oder Paletten, mit Objekten (25) und/oder zum Entnehmen von Objekten (25) von solchen Ladungsträgern (21), mit einer automatischen Objekt-Handhabungseinrichtung (13), welche einen Arbeitsbereich aufweist und zum Legen jeweils wenigstens eines Objekts (25) in oder auf einen im Arbeitsbereich abgestellten Ladungsträger (21) und/oder zum Entnehmen eines Objekts (25) von einem im Arbeitsbereich abgestellten Ladungsträger (21) ausgebildet ist, wobei die Be-/Entladestation (11) insbesondere zum Durchführen eines Verfahrens nach einem der vorstehenden Ansprüche ausgebildet ist,
**gekennzeichnet durch**
eine Sensoranordnung (33) zum Ermitteln der Position eines abgestellten Ladungsträgers (21) innerhalb des Arbeitsbereichs sowie Übertragungsmittel zum Übermitteln der ermittelten Position an eine der Be-/Entladestation (11) zugeordnete Steuereinrichtung (35).

11. Be-/Entladestation nach Anspruch 10,
**dadurch gekennzeichnet, dass** die Sensoranordnung (33) wenigstens eine Kamera umfasst und/oder mehrere Messfelder aufweist.

12. Be-/Entladestation nach Anspruch 10 oder 11,
**dadurch gekennzeichnet, dass** im Arbeitsbereich der automatischen Objekt-Handhabungseinrichtung (13) kein mechanischer Anschlag zur Festlegung der Abstellposition der Ladungsträger (21) vorgesehen ist.

13. Be-/Entladestation nach einem der Ansprüche 10 bis 12,
**dadurch gekennzeichnet, dass** die automatische Objekt-Handhabungseinrichtung (13) programmgesteuert ist und die Steuereinrichtung (35) dazu ausgebildet ist, das Programm der programmgesteuerten Objekt-Handhabungseinrichtung (13) bedarfsweise an die ermittelte Position des Ladungsträgers (21) anzupassen.

14. Be-/Entladestation nach einem der Ansprüche 10 bis 13,
**gekennzeichnet durch**
eine Ladungsträger-Handhabungseinrichtung, welche dazu ausgebildet ist, anhand der ermittelten Position eine bedarfsweise Positionskorrektur des Ladungsträgers (21) vorzunehmen.

15. Be-/Entladestation nach einem der Ansprüche 10 bis 14,
**gekennzeichnet durch**
wenigstens einen Sicherheitssensor (27) zum Überwachen zumindest eines Teils des Arbeitsbereichs unter Ausbildung wenigstens eines Schutzfeldes (29), wobei eine dem wenigstens einen Sicherheitssensor (27) zugeordnete Sicherheits-Steuereinrichtung dazu ausgebildet ist, das Schutzfeld (29) bedarfsweise an die ermittelte Position des Ladungsträgers (21) anzupassen.

## Geänderte Patentansprüche

### Geänderte Patentansprüche gemäss Regel 137(2) EPÜ.

1. Verfahren zum Beladen von Ladungsträgern (21), wie Kisten oder Paletten, mit Objekten (25) und/oder zum Entnehmen von Objekten (25) von solchen Ladungsträgern (21), wobei die Ladungsträger (21) jeweils zu einer Be-/Entladestation (11) transportiert und im Arbeitsbereich einer automatischen Objekt-Handhabungseinrichtung (13) der Be-/Entladestation (11) abgestellt werden, und wobei mittels der automatischen Objekt-Handhabungseinrichtung (13) jeweils wenigstens ein Objekt (25) in oder auf einen abgestellten Ladungsträger (21) gelegt oder von einem abgestellten Ladungsträger (21) entnommen wird, wobei
die Position des abgestellten Ladungsträgers (21) innerhalb des Arbeitsbereichs durch eine Sensoranordnung (33) ermittelt wird und die ermittelte Position an eine der Be-/Entladestation (11) zugeordnete Steuereinrichtung (35) übermittelt wird,
**dadurch gekennzeichnet, dass**
zumindest ein Teil des Arbeitsbereichs durch wenigstens einen Sicherheitssensor (27) unter Ausbildung wenigstens eines Schutzfeldes (29) überwacht wird, wobei das Schutzfeld (29) bedarfsweise an die ermittelte Position des Ladungsträgers (21) angepasst wird.

2. Verfahren nach Anspruch 1,
**dadurch gekennzeichnet, dass**
ein Abschnitt des Arbeitsbereichs als Toleranzbereich festgelegt ist, in welchem ein Abstellen von Ladungsträgern (21) zulässig ist, wobei mittels der Sensoranordnung (33) zumindest der Toleranzbereich und vorzugsweise ausschließlich der Toleranzbereich überwacht wird.

3. Verfahren nach Anspruch 1 oder 2,
**dadurch gekennzeichnet, dass**
die automatische Objekt-Handhabungseinrichtung (13) programmgesteuert ist und eine Steuereinrichtung (35) aufweist, wobei die ermittelte Position an die Steuereinrichtung (35) der programmgesteuerten Objekt-Handhabungseinrichtung (13) übermittelt wird und das Programm der programmgesteuerten Objekt-Handhabungseinrichtung (13) bedarfsweise an die übermittelte Position des Ladungsträgers (21) angepasst wird.

4. Verfahren nach einem der vorstehenden Ansprüche,
**dadurch gekennzeichnet, dass**
die Be-/Entladestation (11) eine automatische Ladungsträger-Handhabungseinrichtung mit einer Steuereinrichtung aufweist, wobei die ermittelte Position an die Steuereinrichtung der Ladungsträger-Handhabungseinrichtung übermittelt wird und mittels der Ladungsträger-Handhabungseinrichtung anhand der übermittelten Position eine bedarfsweise Positionskorrektur des betreffenden abgestellten Ladungsträgers (21) vorgenommen wird.

5. Verfahren nach einem der vorstehenden Ansprüche,
**dadurch gekennzeichnet, dass**
zur Berücksichtigung eines Sicherheitsabstandes zumindest ein äußerer Rand (37) des wenigstens einen Schutzfeldes (29) an die ermittelte Position des Ladungsträgers (21) angepasst wird.

6. Verfahren nach einem der vorstehenden Ansprüche,
**dadurch gekennzeichnet, dass** das wenigstens eine Schutzfeld (29) zur Anpassung an die ermittelte Position des Ladungsträgers (21) als Ganzes verschoben wird.

7. Verfahren nach einem der vorstehenden Ansprüche,
**dadurch gekennzeichnet, dass**
das wenigstens eine Schutzfeld einen äußeren Rand (37) sowie einen entlang einer Aussparung (39) des Schutzfeldes (29) verlaufenden inneren Rand (41) aufweist, wobei ausschließlich der innere Rand (41) an die ermittelte Position des Ladungsträgers (21) angepasst wird.

8. Verfahren nach einem der vorstehenden Ansprüche,
**dadurch gekennzeichnet, dass**
mittels der Sensoranordnung (33) ferner ein aktueller Beladezustand des Ladungsträgers (21), insbesondere ein aktueller Füllstand, ermittelt und an die oder eine weitere Steuereinrichtung (35) übermittelt wird.

9. Be-/Entladestation (11) zum Beladen von Ladungsträgern (21), wie Kisten oder Paletten, mit Objekten (25) und/oder zum Entnehmen von Objekten (25) von solchen Ladungsträgern (21), mit einer automatischen Objekt-Handhabungseinrichtung (13), welche einen Arbeitsbereich aufweist und zum Legen jeweils wenigstens eines Objekts (25) in oder auf einen im Arbeitsbereich abgestellten Ladungsträger (21) und/oder zum Entnehmen eines Objekts (25) von einem im Arbeitsbereich abgestellten Ladungsträger (21) ausgebildet ist, wobei die Be-/Entladestation (11) insbesondere zum Durchführen eines Verfahrens nach einem der vorstehenden Ansprüche ausgebildet ist, und mit
einer Sensoranordnung (33) zum Ermitteln der Position eines abgestellten Ladungsträgers (21) innerhalb des Arbeitsbereichs sowie Übertragungsmittel zum Übermitteln der ermittelten Position an eine der Be-/Entladestation (11) zugeordnete Steuereinrichtung (35),
**gekennzeichnet durch**
wenigstens einen Sicherheitssensor (27) zum Überwachen zumindest eines Teils des Arbeitsbereichs unter Ausbildung wenigstens eines Schutzfeldes (29), wobei eine dem wenigstens einen Sicherheitssensor (27) zugeordnete Sicherheits-Steuereinrichtung dazu ausgebildet ist, das Schutzfeld (29) bedarfsweise an die ermittelte Position des Ladungsträgers (21) anzupassen.

10. Be-/Entladestation nach Anspruch 9,
dadurch **gekennzechnet**, dass
die Sensoranordnung (33) wenigstens eine Kamera umfasst und/oder mehrere Messfelder aufweist.

11. Be-/Entladestation nach Anspruch 9 oder 10,
**dadurch gekennzeichnet, dass**
im Arbeitsbereich der automatischen Objekt-Handhabungseinrichtung (13) kein mechanischer Anschlag zur Festlegung der Abstellposition der Ladungsträger (21) vorgesehen ist.

12. Be-/Entladestation nach einem der Ansprüche 9 bis 11,
**dadurch gekennzeichnet, dass**
die automatische Objekt-Handhabungseinrichtung (13) programmgesteuert ist und die Steuereinrichtung (35) dazu ausgebildet ist, das Programm der programmgesteuerten Objekt-Handhabungseinrichtung (13) bedarfsweise an die ermittelte Position des Ladungsträgers (21) anzupassen.

13. Be-/Entladestation nach einem der Ansprüche 9 bis 12, **gekennzeichnet durch**
eine Ladungsträger-Handhabungseinrichtung, welche dazu ausgebildet ist, anhand der ermittelten Position eine bedarfsweise Positionskorrektur des Ladungsträgers (21) vorzunehmen.
